# EUROPÄISCHE PATENTSCHRIFT

(11) **EP 1 437 615 B1**
(45) Veröffentlichungstag und Bekanntmachung des Hinweises auf die Patenterteilung: **07.02.2007**
(21) Anmeldenummer: 03029516.6
(22) Anmeldetag: 20.12.2003
(51) Int. Cl.: G02B 23/12

(54) **Nachtsichtsystem für Kraftfahrzeuge**
Night vision system for vehicles
Système actif de vision nocturne pour véhicule automobile

(30) Priorität: 10.01.2003 DE 10300612
(43) Veröffentlichungstag der Anmeldung: 14.07.2004
(60) Teilanmeldung: 05106599.3
(73) Patentinhaber: Hella KGaA Hueck & Co., 59552 Lippstadt (DE)
(72) Erfinder: Bierleutgeb, Gerhard, 59597 Erwitte (DE)

(56) Entgegenhaltungen:
- WO-A-01/37000
- FR-A- 2 661 268
- US-A- 5 001 558
- US-A- 5 555 324
- W. THORNTON: "Night vision system has brilliant future" INTERNET ARTICLE, [Online] - 26. September 2002 (2002-09-26) Seite 1 XP002270806 Gefunden im Internet: <URL:http://web.archive.org/web/2002092610 1826/http://www.clarechampion.ie/01/aug/cc 20010824/fe_nv.htm> [gefunden am 2004-02-18]

## Beschreibung

Die Erfindung bezieht sich auf ein Infrarot-Nachtsichtsystem für Kraftfahrzeuge.

Ein derartiges System ist beispielsweise aus der DE 695 06 174 T2 bekannt. Dort wird ein mit einer Infrarot-Kamera aufgenommenes Bild über ein Head-Up-Display in die Windschutzscheibe projiziert. Um die Aufmerksamkeit des Fahrers auf die wärmsten, weil angeblich wichtigsten Objekte, zu lenken, kann der Videoprozessor der Kamera in einen sogenannten Objektnachsweis-Modus gebracht werden, indem durch Einstellung eines Schwellwertes schwache (kalte) Signale unterdrückt werden, um lediglich die wärmeren Objekte darzustellen.

Das System gemäß DE 695 06 174 T2 hat jedoch zwei entscheidende Nachteile. Zum einen sind es nicht immer die wärmem Objekte, die hinsichtlich einer Kollision gefährlich sein können. Zum anderen gehen in dem Objektnachweis-Modus die Informationen über die Umgebung der wärmeren Objekte herum verloren.

Aus der FR 2 661 268 A1 ist darüber hinaus ein System für Kraftfahrzeuge bestehend aus einer Kamera, die ein erstes Bild im sichtbaren und infraroten Wellenlängenbereich aufnimmt, und einer weiteren Kamera, die ein zweites Bild nur im sichtbaren Wellenlängenbereich aufnimmt, bekannt. Dabei werden gemäß FR 2 661 268 A1 die beiden Bilder zur Erzeugung eines Differenzbildes voneinander subtrahiert, wobei das Differenzbild auf einer Anzeigeeinheit dargestellt wird.

Ausgehend von der FR 2 661 268 A1 ist es die Aufgabe der Erfindung, ein Infrarot-Nachtsichtsystem zu schaffen, das in verbesserter Weise auf wichtige Objekte im Infrarot-Bild aufmerksam macht.

Diese Aufgabe wird durch die Merkmale des Patentanspruches 1 gelöst. Die sich daran anschließenden Unteransprüche beziehen sich auf vorteilhafte Weiterbildungen der Erfindung.

Erfindungsgemäß wird nun das Differenzbild markiert, wobei das Differenzbild die Bildinformationen enthält, die nur in dem mit IR-Belichtung aufgenommenem Bild vorhanden sind. Anschließend wird das markierte Differenzbild zur Erzeugung eines auf einem Display als Anzeigeeinheit anzuzeigenden Bildes möglichst konturgenau in ein Gesamtbild eingefügt. Man erhält auf diese Weise ein Bild der Szenerie vor dem Fahrzeug, wobei die Bildausschnitte, die nur mit IR-Belichtung wahrnehmbar sind, durch die Markierung hervorgehoben werden, während die Bildbereiche, die auch mit normaler Scheinwerferbeleuchtung für den Fahrer wahrnehmbar sind, weniger hervorgehoben werden, da sie nur zur Orientierung und Einbettung des markierten Bildes in eine Gesamtszenerie dienen. Die Markierung kann z.B. in einer Einfärbung oder Umrandung des Differenzbildes bestehen. Bei dem Gesamtbild, in das das Differenzbild eingefügt wird, kann es sich um das mit IR-Belichtung aufgenommene Bild oder aber auch um das ohne IR-Belichtung, d.h. nur mit Scheinwerfer-Beleuchtung, aufgenommene Bild handeln.

Es ist vorgesehen, die beiden Bilder (mit und ohne IR-Belichtung) vor der Verknüpfung separat einer Bildvorverarbeitung zu unterziehen, wo die Bilder jeweils für sich z.B. hinsichtlich Helligkeit, Kontrast etc. auf vorbestimmte Ausgangswerte für den Vergleich angepasst (normiert) werden können.

Anhand der Zeichnungen soll die Erfindung nachfolgend verdeutlicht werden.

Es zeigt:
- Fig. 1- 4: Blockschaltbilder verschiedener Ausführungsformen des Nachtsichtsystems
- Figur 5: jeweils ein Bild mit und ohne aktiver IR-Belichtung sowie das Differenzbild,
- Figur 6: die spektrale Empfindlichkeit einer Kamera, die sowohl im sichtbaren als auch im nahen IR-Bereich empfindlich ist.

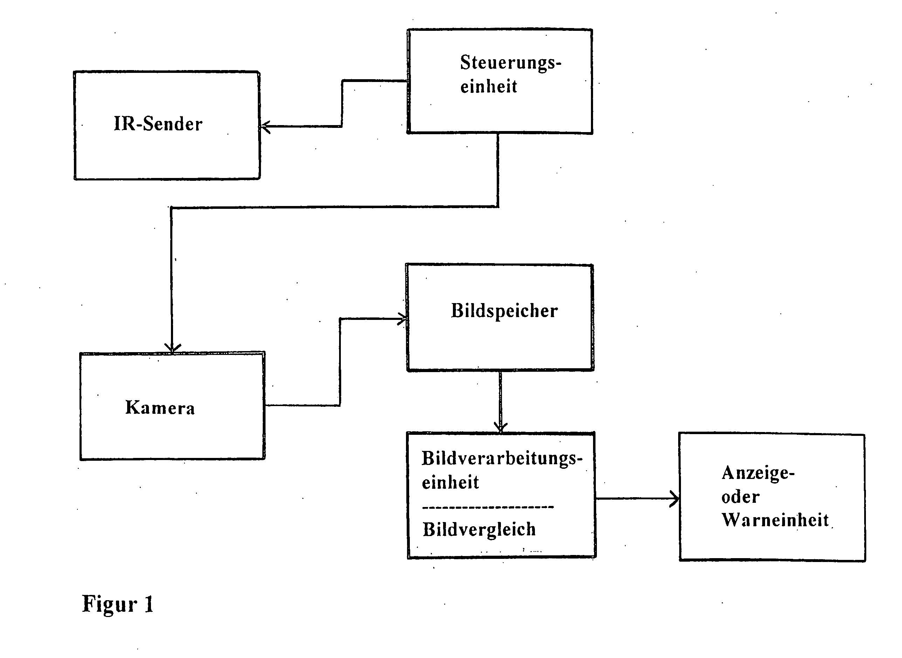

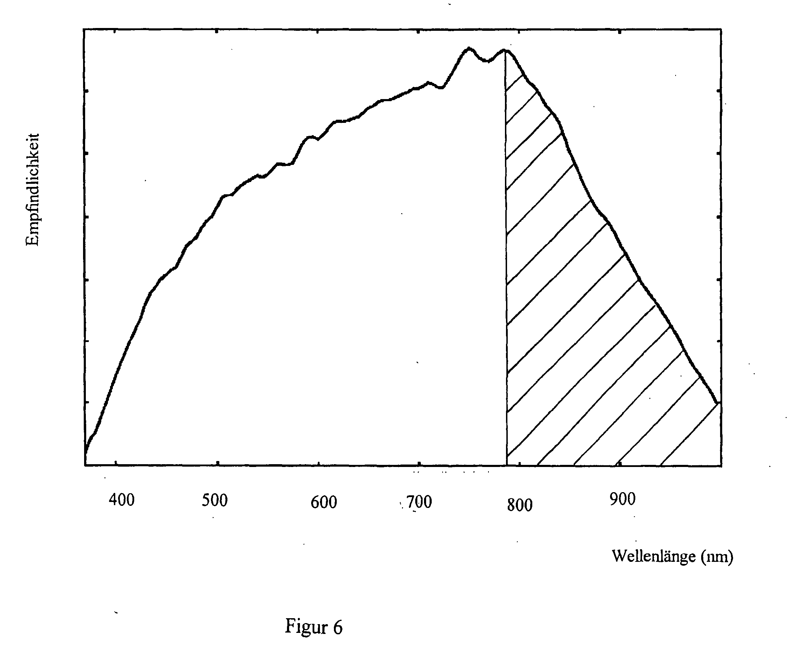

Figur 1 zeigt das Blockschaltbild einer ersten Ausführungsform des Nachtsichtsystems mit nur einer ("digitalen") Kamera, die sowohl für sichtbares Licht als auch für Licht aus dem nahen IR-Bereich empfindlich ist. Dabei kommt vorzugsweise eine Kamera mit einem lichtempfindlichen Halbleitersensor in Form eines zweidimensionalen Arrays bestehend aus einer Vielzahl von Sensor-Pixeln zum Einsatz. Der Einsatz einer derartigen Kamera gestattet in einfacher Weise die digitale Weiterverarbeitung der Bildinformationen der einzelnen Pixel. In Figur 6 ist die typische spektrale Empfindlichkeit eines Halbleitersensors gezeigt, der in einer Kamera eingesetzt wird, die sowohl für sichtbares Licht als auch für Licht aus dem nahen IR-Bereich empfindlich ist. Dabei ist der sich an den sichtbaren Bereich anschließende nahe IR-Bereich schraffiert dargestellt. Eine Kamera mit einer derartigen Empfindlichkeit ist "blind" für Infrarotstrahlung, die auf der Eigenwärme von Objekten bei Umgebungstemperatur (-10°C bis + 30°C) basiert, da diese überwiegend im mittleren bis fernen IR-Bereich (> 3µm) abstrahlen. Ohne eine aktive IR-Beleuchtung im nahen IR-Bereich, würde eine solche Kamera nur mit sichtbarem Licht belichtet. Zur Realisierung einer aktiven IR-Beleuchtung für den nahen IR-Bereich ist ein IR-Sender, vorzugsweise eine IR-Diode, vorgesehen, die Licht im nahen IR-Bereich mit einem Emissionsmaximum zwischen 900nm und 1 µm abstrahlt. Um abwechselnd ein Bild mit aktiver IR-Belichtung und ohne IR-Belichtung aufzunehmen, wird der IR-Sender getaktet, z.B. mit einer Taktfrequenz von 25Hz, betrieben, wobei die beiden Bilder bei einer Taktfrequenz von 25Hz bereits quasi simultan aufgenommen werden. Die getaktete Ansteuerung des IR-Senders erfolgt über eine Steuereinheit. Bei eingeschaltetem IR-Sender erfolgt dann eine Belichtung mittels Licht aus dem nahen IR-Bereich und mittels sichtbarem Licht, das hauptsächlich durch die Schweinwerfer erzeugt wird. Bei ausgeschaltetem IR-Sender erfolgt dann eine Belichtung nur mit sichtbarem Licht aufgrund der Scheinwerferbeleuchtung. Die so aufgenommenen Bilder - bzw. die digitalisierten Bildinformationen der einzelnen Pixel des Halbleitersensors- werden in einem Bildspeicher zwischengespeichert, bevor sie einer Bildverarbeitungseinheit für den Bildvergleich zugeführt werden. In Abhängigkeit vom Ergebnis dieses Bildvergleiches erfolgt nun eine erfindungsgemäße Ansteuerung der Anzeigeeinheit. Bei der Bildverarbeitungseinheit kann es sich um ein computerimplementiertes Programm oder aber auch um eine Hardwareschaltung handeln.

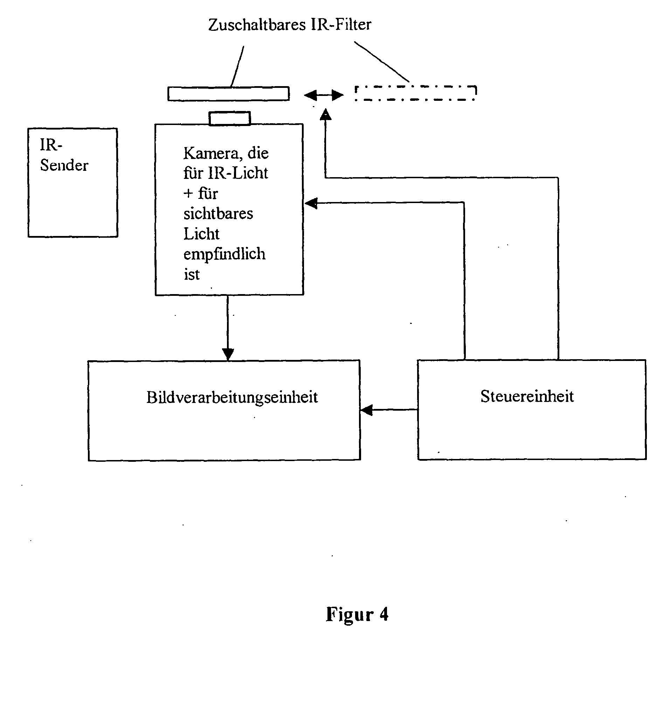

**Figur 4** zeigt das Blockschaltbild einer **zweiten Ausführungsform** des Nachtsichtsystems mit ebenfalls nur einer Kamera (vgl. erste Ausführungsform gemäß Fig. 1), die sowohl für sichtbares Licht als auch für Licht aus dem nahen IR-Bereich empfindlich ist. Im Unterschied zur ersten Ausführungsform wird hier der IR-Sender nicht getaktet betrieben, sondern kontinuierlich. Um nun abwechselnd ein Bild mit aktiver IR-Belichtung und ohne IR-Belichtung aufzunehmen, ist ein optisches Filter vorgesehen ist, das nur sichtbares Licht durchlässt, so dass die Belichtung der Kamera mit Hilfe des optischen Filters wahlweise mit infrarotem Licht ermöglicht oder verhindert wird. Das IR-Filter wird zu diesem Zweck zu- und abgeschaltet, indem es für eine Aufnahme ohne IR-Belichtung beispielsweise mechanisch vor das Kameraobjektiv gebracht wird und für eine Aufnahme mit IR-Belichtung wieder entfernt wird.

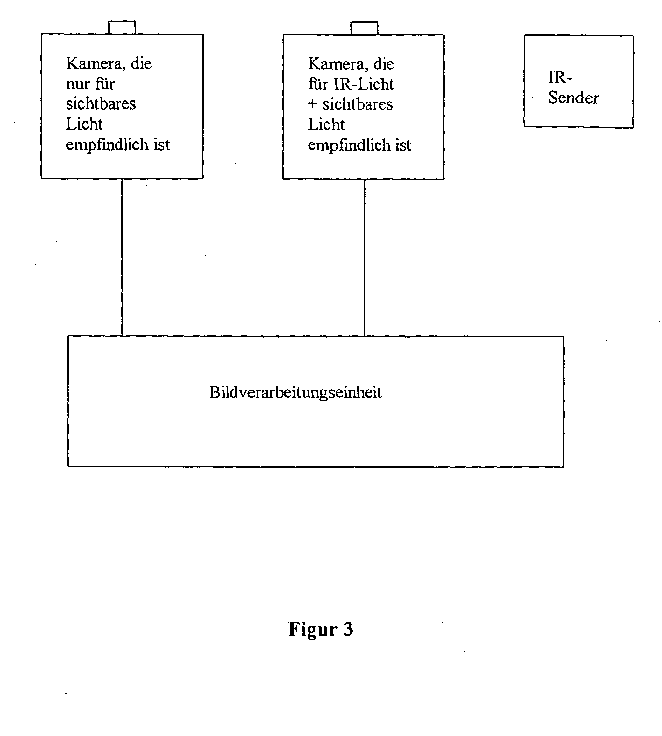

**Figur 3** zeigt das Blockschaltbild einer **dritten Ausführungsform** des Nachtsichtsystems mit zwei Kameras, von denen eine nur für sichtbares Licht empfindlich ist, während die andere für sichtbares Licht und für Licht aus dem nahen IR-Bereich empfindlich ist. Zur Realisierung einer aktiven IR-Beleuchtung für den nahen IR-Bereich ist ebenfalls ein IR-Sender vorgesehen. Bei einem kontinuierlichen Betrieb des IR-Senders kann mit dieser Ausführungsform gleichzeitig jeweils ein Bild nur mit Belichtung durch Licht aus dem sichtbaren Bereich und ein Bild mit Belichtung durch Licht aus dem sichtbaren Bereich und dem nahen IR-Bereich aufgenommen werden.

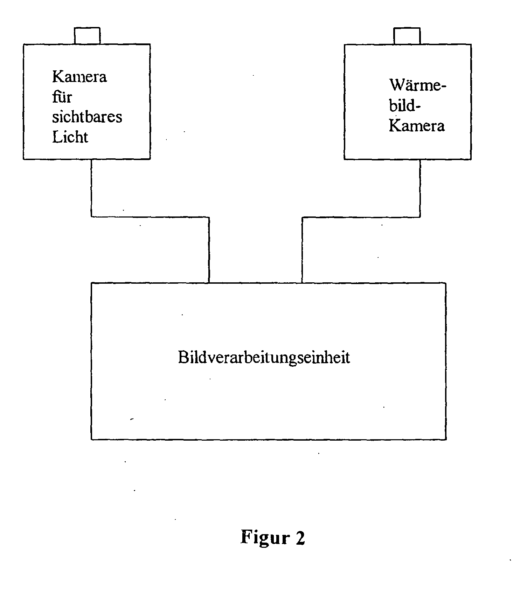

**Figur 2** zeigt das Blockschaltbild einer **vierten Ausführungsform** des Nachtsichtsystems, das in diesem Fall als passives System ausgelegt ist, wobei zwei Kameras vorgesehen sind, nämlich eine erste Kamera, die nur für sichtbares Licht empfindlich ist, und eine zweite Kamera in Form eines Wärmebildgerätes, die für Licht aus dem mittleren bis fernen IR-Bereich empfindlich ist. Derartige Wärmebildgeräte weisen beispielsweise ein Detektorarray in Form einer matrixartigen Anordnung von Mikrobolometem auf.

In der nachfolgenden Tabelle sind verschiedene Möglichkeiten für die Kombination von unterschiedlichen Wellenlängebereichen aufgeführt.

| Kombinationen | Bild 1 | Bild 2 |
|---|---|---|
| 1. | 1. Wellenlängenbereich: sichtbarer und naher IR-Bereich (380 nm bis 3 µm) | 2. Wellenlängenbereich: sichtbarer Bereich (380 nm bis 780 nm) |
| 2. | 1. Wellenlängenbereich: sichtbarer und naher IR-Bereich (380 nm bis 3 µm) | 2. Wellenlängenbereich: mittlerer bis ferner IR-Bereich (3 µm bis 12 µm) |
| 3. | 1. Wellenlängenbereich: sichtbarer und naher IR-Bereich (380 nm bis 3 µm) | 2. Wellenlängenbereich: naher IR-Bereich (780 nm bis 3 µm) |
| 4. | 1. Wellenlängenbereich: naher IR-Bereich (780 nm bis 3 µm) | 2. Wellenlängenbereich: sichtbarer Bereich (380 nm bis 780 nm) |
| 5. | 1. Wellenlängenbereich: naher IR-Bereich (780 nm bis 3 µm) | 2. Wellenlängenbereich: mittlerer bis ferner IR-Bereich (3 µm bis 12 µm) |
| 6. | 1 . Wellenlängenbereich: mittlerer bis ferner IR-Bereich (3 µm bis 12 µm) | 2. Wellenlängenbereich: sichtbarer Bereich (380 nm bis 780 nm) |

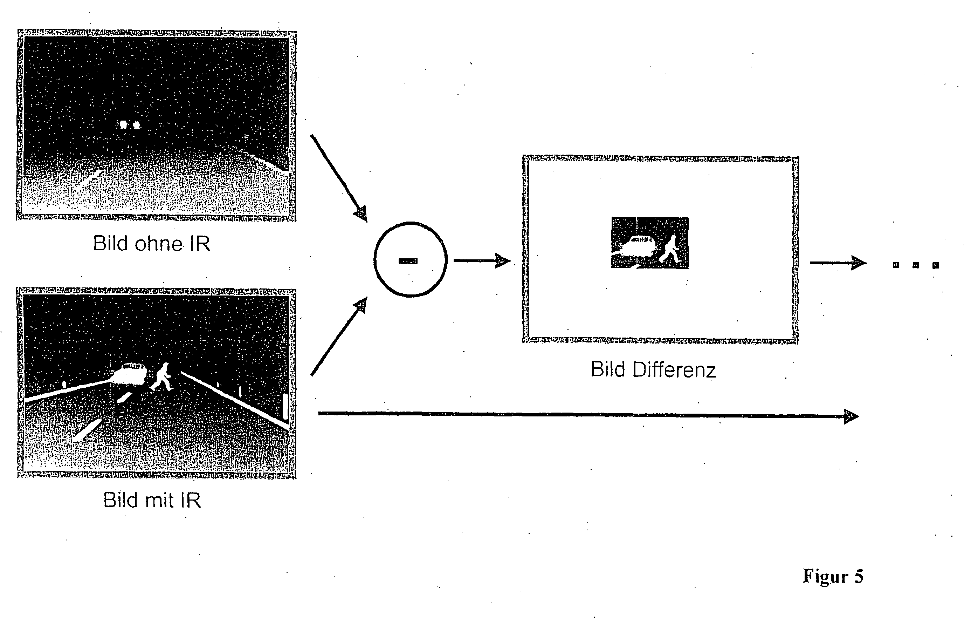

**Figur 5** zeigt oben ein Bild, das ohne IR-Belichtung - also nur mit normaler Scheinwerferbeleuchtung - aufgenommen wurde, während unten das zeitgleich oder zumindest quasi zeitgleich mit IR-Belichtung aufgenommene Bild dargestellt ist. Rechts daneben ist das Differenzbild dargestellt, welches erfindungsgemäß markiert und in ein Gesamtbild eingefügt wird, um die Aufmerksamkeit des Fahrers zu erhöhen.

## Patentansprüche

1. Nachtsichtsystem für Kraftfahrzeuge bestehend aus
- mindestens einer Kamera zur Aufnahme von Bildern der Szenerie vor dem Kraftfahrzeug,
- mindestens einer Anzeigeeinheit, die in Abhängigkeit von den mit der Kamera gewonnenen Bildinformationen angesteuert wird,
- wobei mit einer Kamera ein erstes Bild durch Empfang von Strahlung in einem ersten Wellenlängenbereich aufgenommen wird,
- wobei mit einer Kamera mindestens ein zweites Bild durch Empfang von Strahlung in einem zweiten Wellenlängenbereich aufgenommen wird,
- wobei der erste und der zweite Wellenlängenbereich zumindest teilweise voneinander verschieden sind,
- wobei der erste und/oder der zweite Wellenlängenbereich zumindest teilweise im infraroten Bereich liegt,
- die Bildinformationen der beiden Bilder einer Bildverarbeitungseinheit zugeführt werden,
- die Bildinformationen dieser beiden Bilder in der Bildverarbeitungseinheit miteinander verknüpft werden,
- wobei die Verknüpfung in einem Vergleich der Bildinformationen der beiden Bilder in der Bildverarbeitungseinheit besteht,
- wobei durch den Vergleich der beiden Bilder Bildinformationen extrahiert werden, die ausschließlich durch Strahlung im infraroten Bereich erzeugt wurden,
- wobei der Vergleich der beiden Bilder in der Bildverarbeitungseinheit darin besteht, daß die beiden Bilder zur Erzeugung eines Differenzbildes voneinander subtrahiert werden, indem die Helligkeitswerte korrespondierender Bildpunkte oder die Helligkeitsmittelwerte korrespondierender Bildpunktecluster voneinander subtrahiert werden,
- wobei das Differenzbild ausschließlich Bildinformationen enthält, die durch Strahlung im infraroten Bereich erzeugt wurden,
**dadurch gekennzeichnet, daß**
- das Differenzbild markiert wird,
- zur Erzeugung eines auf einem Display als Anzeigeeinheit anzuzeigenden Bildes das markierte Differenzbild konturgenau in ein Gesamtbild der Szenerie vor dem Kraftfahrzeug eingefügt wird.

2. Nachtsichtsystem nach Anspruch 1,
**dadurch gekennzeichnet, dass**
die beiden Bilder vor der Verknüpfung jeweils separat einer Bildvorverarbeitung unterzogen werden.

3. Nachtsichtsystem nach Anspruch 1 oder 2,
**dadurch gekennzeichnet, dass**
der erste und/oder der zweite Wellenlängenbereich zumindest teilweise im sichtbaren Bereich liegt.

## Claims

1. Night vision system for motor vehicles consisting of
- at least one camera for taking pictures of the scenery in front of the vehicle,
- at least one display unit which is actuated depending on the image information gathered by means of the camera,
- where a camera takes a first picture by receiving radiation within a first wave range,
- where a camera takes at least a second picture by receiving radiation within a second wave range,
- where the first and second wave range at least partially differ from one another,
- where the first and/or the second wave range are at least partially within the infrared range,
- the image information of the two pictures are fed to an image processing unit,
- the image processing unit links the image information of the two pictures with each other,
- where the linking consists of the image processing unit comparing the image information of the two pictures,
- where the comparison of the two pictures leads to image information being extracted which refers to radiation solely from the infrared wave range,
- where the image processing unit compares the two pictures such that the two pictures are subtracted to create a differential image by subtracting the brightness values of corresponding pixels or by subtracting the average brightness values of corresponding pixel clusters,
- where the differential image solely contains image information generated by radiation from the infrared wave range,
**wherein**
- the differential image is marked out,
- the outline of the marked-out differential image is accurately pasted into a scenic picture of the area in front of the motor vehicle to generate a picture to be outputto the display of a monitor.

2. Night vision system as in claim 1,
wherein
the two pictures are separately exposed to preliminary image processing before being linked.

3. Night vision system as in claims 1 or 2,
wherein
the first and/or the second wave range are at least partially within the visible range.

## Revendications

1. Système de vision nocturne pour des véhicules à moteur, comprenant
- au moins une caméra de prises de vues du décor à l'avant du véhicule,
- au moins un module d'affichage qui est commandé en fonction des informations d'images acquises au moyen de la caméra,
- une première image étant enregistrée avec une caméra par la réception d'un rayonnement dans une première plage de longueur d'onde,
- au moins une deuxième image étant enregistrée avec une caméra par la réception d'un rayonnement dans une deuxième plage de longueur d'onde,
- les première et deuxième plages de longueur d'onde étant au moins en partie différentes l'une de l'autre,
- la première et/ou la deuxième plage de longueur d'onde se situant au moins en partie dans le domaine infrarouge,
- les informations d'image des deux images sont envoyées à un module de traitement d'image,
- les informations d'image de ces deux images sont chaînées les unes aux autres dans le module de traitement d'image,
- le chaînage consistant en une comparaison des informations d'image des deux images dans le module de traitement d'image,
- la comparaison des deux images servant à extraire des informations d'image qui sont générées exclusivement par un rayonnement dans le domaine infrarouge,
- la comparaison des deux images dans le module de traitement d'image consistant à soustraire les deux images l'une de l'autre afin de produire une image différentielle, en soustrayant l'une de l'autre les valeurs de luminosité de pixels correspondants ou les valeurs de luminosité de groupes de pixels correspondants,
- l'image différentielle contenant exclusivement des informations d'image qui ont été générées par un rayonnement dans le domaine infrarouge,
**caractérisé en ce que**
- l'image différentielle est marquée,
- pour générer une image à visualiser sur un moniteur servant de module d'affichage, l'image différentielle marquée est introduite en respectant son contour dans une image globale du décor à l'avant du véhicule.

2. Système de vision nocturne selon la revendication 1, **caractérisé en ce que** les deux images sont soumises chacune séparément à un traitement d'image avant le chaînage.

3. Système de vision nocturne selon la revendication 1 ou la revendication 2, **caractérisé en ce que** la première et/ou la deuxième plage de longueur d'onde se situe au moins en partie dans le domaine visible.
